# EUROPEAN PATENT SPECIFICATION

(11) **EP 0 751 535 B1**
(45) Date of publication and mention of the grant of the patent: **15.12.1999**
(21) Application number: 96304667.7
(22) Date of filing: 25.06.1996
(51) Int. Cl.: H01B 7/34, G02B 6/44, C08K 3/22

(54) **Cable having superior resistance to flame spread and smoke evolution**
Kabel mit hoher Flammfestigkeit und Rauchentwicklungsbeständigkeit
Câble ayant une résistance supérieure à la propagation de flamme et au développement de fumée

(30) Priority: 30.06.1995 US 497043
(43) Date of publication of application: 02.01.1997
(73) Proprietor: AT&T IPM Corp., Coral Gables, Florida 33134 (US)
(72) Inventor: Bleich, Larry Lynn, Omaha, Nebraska 68144 (US); Moore, Warren Freeman, Omaha, Nebraska 68144 (US); Hardin, Tommy Glenn, Lilburn, Georgia 30247 (US)
(74) Representative: Johnston, Kenneth Graham

(56) References cited:
- WO-A-96/26240
- US-A- 5 059 651
- US-A- 5 173 960

## Description

### Technical Field

This invention relates to a cable having superior resistance to flame spread and smoke evolution due to the incorporation of a mixture of inorganic oxides into the insulation layer(s) surrounding the transmission media.

### Background of the Invention

In the construction of many buildings, a finished ceiling, which is referred to as a drop ceiling, is spaced below a structural floor panel that is constructed of concrete, for example. The drop ceiling supports light fixtures and other ceiling-mounted items, while the space between the ceiling and the structural floor from which it is suspended serves as a return-air-plenum for elements of heating and cooling systems, as well as a convenient location for the installation of communications, computer and alarm system cables. It is not uncommon for these plenums to be continuous throughout the length and width of each floor.

When a fire occurs in an area between a floor and a drop ceiling thereabove, it may be contained by walls and other building elements which enclose that area. However, when and if the fire reaches the plenum, and if flammable material occupies the plenum, the fire can spread quickly through an entire story of the building, and smoke can be conveyed through the plenum to adjacent areas. The fire could travel along the length of the various cables which are installed in the plenum.

Because of the possibility of such flame spread and smoke evolution, particularly when aided by flammable insulation of cables. the 1975 edition of the National Electric Code (NEC) prohibited the use of electrical cables in plenums unless they were enclosed in metal conduits. However, the code permits certain exceptions to this cost prohibitive requirement. For example, fire-retardant, smoke-suppressed cables without metallic conduit are permitted, provided that such cables are tested and approved by an authority such as Underwriters Laboratories.

In the past, cables have comprised a core having a paper core wrap enclosed in a relatively thick metallic shield, but such cables are relatively inflexible and somewhat difficult to maneuver in plenums. Moreover, care must be taken during installation to guard against possible electrical shock, which may be caused by the metallic sheath of the above-described cables engaging exposed electrical service wires or equipment in a plenum. Also, while the above-described cables meet the flame-spread requirements of the code, the snugness with which the metallic shield encloses the conductors prevents charring of the conductor insulation that could effectively seal off a portion of the cable about the flame and reduce smoke evolution. Thermoplastic fluoropolymers have been accepted as the jacketing and insulation materials for plenum cables without the use of metal conduit, but such materials are relatively expensive and difficult to process. Fire-retardant poly (vinyl chloride) compositions are currently evolving as plenum grade materials, but typically have much poorer dielectric characteristics than the fluoropolymers currently used as insulation materials. As used herein, the term "dielectric characteristics" specifically includes the properties of dissipation factor and dielectric constant.

One approach to the problem of flame spread and smoke evolution is to include a barrier layer in a cable. The prior art includes a cable having a barrier layer that is made of an inorganic, cellular material which encloses the core, and a metallic barrier having longitudinal edge portions that form a seam. The metallic barrier is covered with two tapes comprising a thermosetting material which are wrapped about the metallic barrier to form overlapping seams. Such a cable is disclosed in U.S. Pat. No. 4,284,842.

Another disclosure of a barrier material which includes ethylene copolymers with enhanced fire-resistant properties appears in European Patent Application 0 248,404 which was filed June 2, 1987. The composition includes an ethylene copolymer, a mixture of aluminum trihydrate and calcium carbonate or calcium-magnesium carbonate or both, and a phosphate ester. Optimally, the composition may include a borosilicate glass. The phosphate ester increases the flexibility of the composition. As the composition decomposes or burns, the aluminum and calcium constituents form a ceramic ash with a cellular structure. As the ash builds up, it becomes a thermal insulator. The borosilicate glass acts to harden the ash at lower temperatures than those that normally activate the Ca-Al complex.

Regardless of the particular technique used to reduce flame spread and smoke evolution, one of the problems in providing a superior fire-retardant communications cable is that of meeting operational and/or performance criteria which run counter to each other. Desired properties for an insulation material are a relatively low dielectric constant and dissipation factor. This becomes important in today's world, in which higher transmission frequencies and bit rates are demanded by customers. However, insulating materials of the prior art, such as polyethylene, for example, which exhibit relatively good dielectric characteristics do not have suitable resistance to flame spread.

Current solutions which use certain specific polymers having desirable electrical properties are to purposely incorporate additives into the polymers which delay the establishment of a fire. Such solutions have limitations. Many fire-retardant additives delay only the onset of a fire and, additionally, lose their effectiveness once the temperature exceeds a critical threshold. Also, the use of halogenated and phosphorous fire retardants tends to increase smoke evolution and is accompanied by the generation of corrosive gases. Metal hydrates, in the quantities added to provide fire retardance, may compromise the mechanical properties of the resultant material and most certainly will degrade the electrical properties. Typically, additive systems necessary for improved fire resistance result in poorer dielectric characteristics. Presently, there appears to be no apparent way to produce a polyolefin insulation with a satisfactory balance of fire retardance, mechanical properties and dielectric characteristics.

A relatively new attempt at providing a communication cable that has superior resistance to flame spread and smoke evolution is set forth in commonly assigned U.S. Patent No. 5,173,960. A fire-retardant means is disclosed therein which uses a mixture of inorganic oxides in a number of different cable structures. For example, the fire retardant means may be included as the jacket of the cable, a longitudinally extending tape, or coextruded with the jacket. More specifically, the disclosed barrier system is not overly concerned with the flame spread and smoke evolution characteristics of the materials to be used in the core, since the jacket or tape or coextruded jacket is intended to provide a barrier to seal off the core, and prevent flame spread and smoke evolution.

However, such teachings do not disclose incorporating any mixture of inorganic oxides into the compositional formulation of the insulation material itself. To the contrary, the present invention sets forth and claims a transmission media insulation material, and associated communication cable, that not only provides superior resistance to flame spread and smoke evolution but also provides the necessary electrical performance to make it acceptable for use as the layer of material immediately adjacent the transmission media.

### Summary of the Invention

The foregoing problems of the prior art have been overcome by the cable of this invention as set forth in the claims herein

### Brief Description of the Drawing

FIG. 1 is an end view of a cable which is structured in accordance with this invention and which has superior fire and smoke retardance properties;
FIG. 2 is an elevational view of a portion of a building to show an environment in which the cable of this invention may be used; and
FIG. 3 is an end view of another embodiment of the present invention.

### Detailed Description

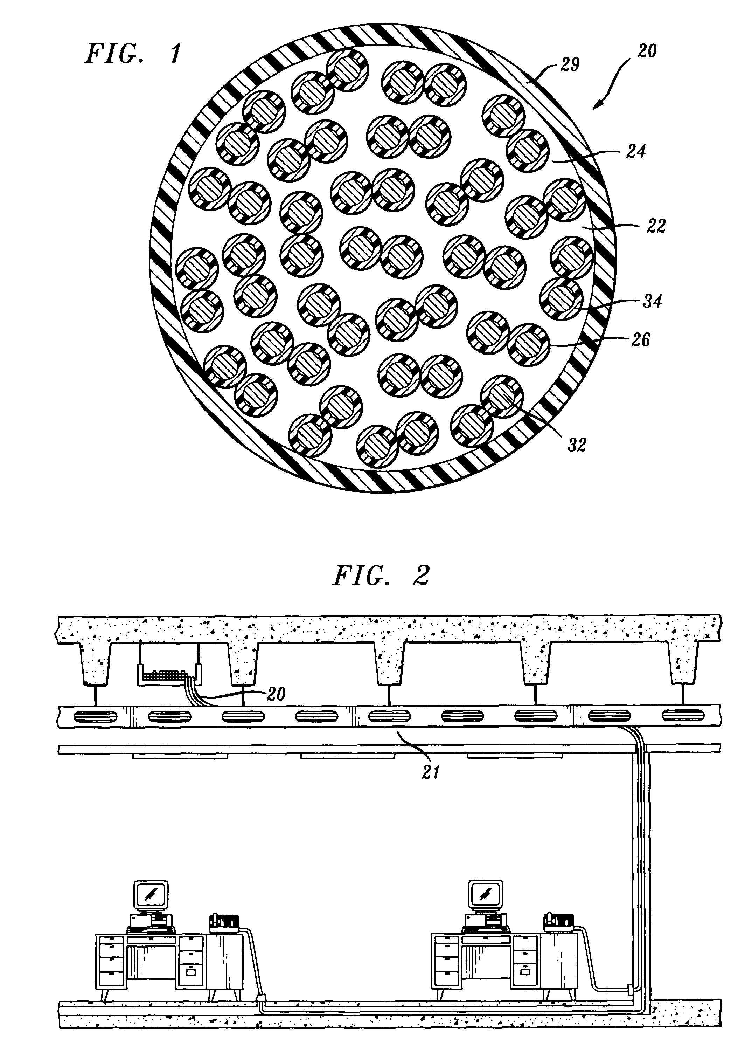

Referring now to FIG. 1, there is shown a cable which is designated generally by the numeral 20. The cable may be used on a customer's premises such as, for example, in a plenum 21 (see FIG. 2) of a building. Also, the cable 20 may be used in applications that have less stringent fire categories as designated by the NEC, such as a building riser (not shown).

As seen in FIG. 1, the cable 20 includes a core 22 which comprises one or more transmission media, such as one or more pairs 24-24 of insulated metallic conductors 26-26 or optical fibers (not shown). Over the core 22 is disposed an outer jacket 29. While the particular cable designs illustrated and described herein do not specifically set forth any particular sheath system, the scope of the present invention is clearly intended to encompass cable designs which incorporate a mixture of inorganic oxides as described and claimed herein, regardless of the exact sheath system selected for that particular application.

Each of the insulated metallic conductors comprises a longitudinally extending metallic conductor 32 and an insulative cover 34 which surrounds the metallic conductor 32. In accordance with the present invention, the insulative cover 34 is a fire retardant thermoplastic material. Suitable base materials for the thermoplastic insulative layer include poly (vinyl chloride), polyolefins, polyamides, polyurethanes, polyesters, elastomers and copolymers thereof.

The present invention describes modifying any of the materials commonly used as a thermoplastic insulative layer in a manner that significantly enhances their resistance to flame spread and smoke evolution. The insulative layer of the present invention that surrounds the transmission media includes a base material of a thermoplastic from the group listed above that, either inherently or due to specific treatment, exhibits some fire retardant capabilities. More specifically, in accordance with the present invention, the fire retardant thermoplastic material is further modified by the inclusion of a mixture of inorganic oxides. Regardless of the initial level of fire retardance exhibited by the thermoplastic material, the incorporation of the inorganic oxides described herein into the thermoplastic composition significantly increases the fire resistance of the resulting product.

Broadly speaking, presently available thermoplastic materials that are suitable for use as the insulative cover of the present invention can be subdivided into three general classes, namely fire retarded polyolefins, halopolymers and specialty engineering resins. However, it is well accepted throughout the industry that few of the polymers in the last two groups listed above exhibit the requisite dielectric characteristics for use in the communication cable application described as the preferred embodiment herein. Furthermore, the few halopolymers and/or specialty engineering resins which appear acceptable for the preferred application of the present invention have been considerably more expensive to date, thus establishing the fire retarded polyolefins as the most practical group for such uses. It should be noted that the benefits and enhancements achieved through the incorporation of the two inorganic oxides disclosed and claimed herein into an insulative layer from any of the three general classes is believed to be within the scope of the present invention.

Even though polyolefins are inherently flammable. it is well known throughout the industry that a variety of procedures can be undertaken to significantly enhance their fire retardance. One such commonly accepted practice involves the addition of approximately 25-35% by weight of a highly (60-85% by weight) chlorinated or brominated material along with approximately 5-10% by weight of antimony oxide. As an alternative, technologies using 25-35% by weight of nonhalogenated materials, typically compounds of boron, phosphorus, nitrogen and silicon, and/or combinations thereof are also known. In accordance with the present invention, either of the two examples of fire retarded polyolefins set forth above or any other industry accepted technique leading to the desired fire retarded polyolefins, is believed to be within the scope of the present invention.

With specific regard to the preferred embodiment of the present invention, it is important to note that while a number of techniques may exist for imparting fire retardance to inherently flammable polyolefins, doing so without seriously degrading the dielectric characteristics and/or increasing smoke evolution during combustion is a very difficult proposition. Therefore, given the demanding requirements of the application at hand, it is quite likely that various smoke suppressants, additional compositional stabilizers and other additives would also be present in a formulation incorporating the novel features of the present invention. However, the inclusion or omission of any such additives is not believed to be essential to fully realize the benefits and enhancements of the present invention.

The cable of this invention overcomes the problem of competing properties by enhancing the compositional formulation of the material used as the insulation layer. More specifically, the newly formulated insulation material includes at least a first inorganic oxide constituent having a relatively low melting point and a second inorganic oxide devitrifying constituent having a relatively high melting point. The low temperature melting first inorganic oxide constituent of the additive system begins to melt at a much lower temperature, i.e., about 350°C to 450°C, than typical glasses. See British patent GB 2220208. The inorganic oxide constituents may be referred to as glass frits.

Glasses which may be used as the low melting first inorganic oxide include phosphate glasses such as inorganic oxide glasses having the following mole percent composition: 1.2 to 3.5% B₂ O₃, 50 to 75% P₂ O₅ , 0 to 30% PbO and 0 to 5% of at least one oxide selected from the oxides of Cu, Ag, Au, Sc, Y, La, Ti, Zr, Hf, V, Nb, Ta, Cr, Mo, W, Mn, Tc, Re, Fe, Co, Ni, Ru, Rh, Pd, Os, Ir, Pt, Ce, Pr, Nd, Pm, Sm, Eu. Gd, Tb, Dy, Ho, Er, Tm, Yb, Lu, Th, Pd, and U, and which glass includes at least one oxide selected from alkali metal oxides and at least one oxide selected from alkaline earth metal oxides and zinc oxides. Preferred lead oxide containing glasses are made when the lead oxide ranges from 10 to 30 mole percent and the P₂ O₅ in the composition ranges from 50 to 58 mole percent. See U.S. patent 4,079,022 which is expressly incorporated by reference hereinto.

The higher melting point, second inorganic oxide constituent is a devitrifying frit that crystallizes, that is, passes from a glassy to a crystalline state, at a temperature between about 650°C and 1000°C, and forms a crusty layer which seals off the inner portion of the cable. Desirably, the second inorganic oxide constituent remains hard up to a temperature of about 1100°C. The second inorganic oxide constituent may be a chopped ceramic fiber and/or basalt fiber. A preferred ceramic fiber is polycrystalline mullite fiber (Al₂ O₃/SiO₂). See British patent GB 2220208.

A commercially available material which is a blend of vitreous and ceramic materials is one which is known as Ceepree fire barrier filler and which is marketed by Brunner Mond and Company, Ltd. Such a material is described in a paper authored by A. S. Piers and entitled "Enhanced Performance of Composite Materials Under Fire Conditions" presented at Polymers in a Marine Environment conference in London on October 23-24, 1991. Such a material is described also in a paper presented in Vol. II of Proceedings of the Second Conference held on May 14-16, 1991, and edited by M. Levin and G. S. Kirshenbaum, copyright 1991 by Business Communications Co., Inc. Also, it is disclosed in a brochure distributed by ICI Soda Ash Products dated May, 1990, which documented a presentation given in London, England on January 17-18, 1990.

Also, as mentioned hereinbefore, the glass filaments or particulates in cables of this invention begin to melt when exposed to a temperature in the range of about 350°C. This is a variation from typical glass formulations which melt in the range of 1500°C. Further, the glass filaments do not remelt under normal fire temperatures.

This melting causes a flow of the vitreous material about the burning material. The burning material or portions thereof which have not yet decomposed are encapsulated. As a result of such encapsulation, access of the core to oxygen is inhibited which inhibits carbonaceous decomposition products from being emitted as smoke. A very stable char structure is provided and the smoke yield is reduced. The first inorganic oxide constituent encapsulates and fuses with combustible material, char, reinforcing fibers and any fillers.

Also, as mentioned hereinbefore, at higher temperatures of about 650°C and beyond, the higher melting point second inorganic oxide constituent devitrifies, that is, it passes from a glassy to a crystalline state. As a result, the viscosity of the additive increases and the composition sets into a solid form. As the second frit hardens, it holds together char from the organic base resin. The result is a hard, protective barrier layer. The crusty layer prevents the passage of smoke, toxic fumes and flames. As a result, flame spread and smoke evolution are inhibited. The glass frits within the insulation material thus encapsulates and fuses with combustible material, char, reinforcing fibers and any fillers. The resulting crystalline structure provides thermal protection up to a temperature of about 1100°C.

The blend of vitreous and ceramic materials does not delay ignition but, in cooperation with the base material, resists penetration of heat energy while maintaining the circuit integrity of the cable. The delay of ignition may be accomplished by the inclusion of the aforementioned charring and hydrated additives.

In another embodiment of the present invention, the inorganic oxides may also be dispersed into the outer jacket. Such a cable configuration may be desirable for applications where extreme restrictions are placed on the amount of flame spread and smoke evolution that is acceptable.

Additionally, a glass-ceramic mixture may be embodied in the cable 20 in any of several other ways. For example, the glass filaments or particulates may be coextruded with another plastic material which is used in the cable. For example, the glass could be coextruded with the thermoplastic insulation layer.

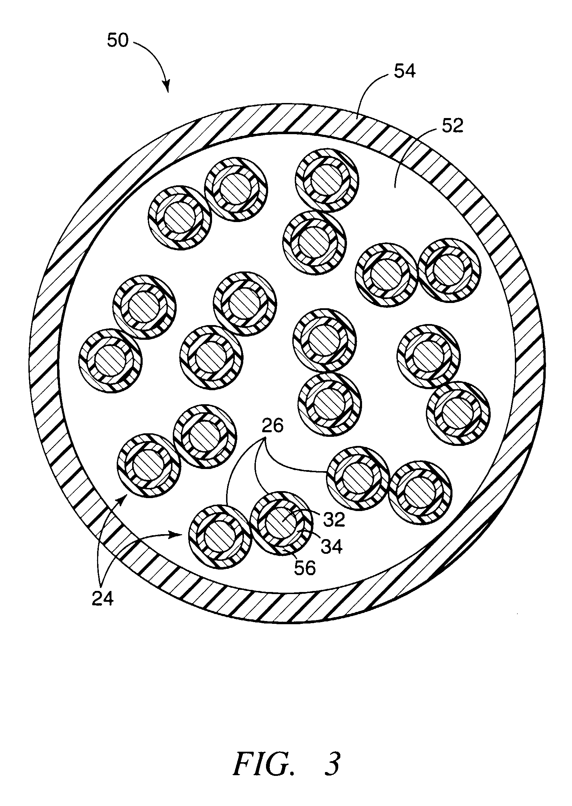

Another embodiment of the cable of this invention is shown in FIG. 3. A cable designated generally by the numeral 50 includes a core 52 comprising one or more pairs 24-24 of insulated metallic conductors 26-26 or optical fibers (not shown). Disposed about the thermoplastic insulation layer 34 of insulated metallic conductors 26-26 or optical fibers (not shown) is an additional layer 56 which is destined upon exposure to temperatures of at least 350°C to form a barrier layer. The barrier layer 56 may be applied as a coating or it may be coextruded along with the insulation layer 34.

When a coating or other coextruded layer is used, the weight percent of each constituent will depend on properties of the cable such as, for example, the mechanical properties which are desired. A typical composition for the coextruded barrier layer includes about 10 to 50% of a polymeric base material, about 5 to 70% of a fire retardant system exclusive of the inorganic oxide constituents and about 5 to 60% of the inorganic oxide constituents.

The barrier system of this invention permits the use in the core of cable materials which have very favorable dielectric properties and which are relatively inexpensive but which are not as flame retardant as, for example, TEFLON plastic. Advantageously, with the barrier layer of this invention, favorable dielectric materials may be used in the core and the coextruded layer provides a barrier to seal off the core and prevent flame spread and smoke evolution.

Advantageously, the function of the barrier layer of the cable of this invention is dissimilar to that of flame retardant additives. It does not always delay ignition, but what it does do is to cause the host material, i.e. the polymer material, to be able to resist the penetration of fire and release of associated smoke and combustibles while moderating any loss of integrity and associated mechanical properties.

## Claims

1. A fire retardant communications cable, said cable comprising:
a core which comprises at least one transmission media; and
a fire retardant thermoplastic insulative layer surrounding at least one transmission media, wherein the fire retardant thermoplastic layer comprises a mixture of a first inorganic oxide constituent which is characterized by melting when exposed to temperatures of at least about 350°C and a second inorganic oxide constituent which begins to crystallize at about 650°C.

2. The cable of claim 1, wherein said fire retardant thermoplastic insulative layer is effective when said cable is exposed to temperatures in the range of about 350°C to 1000°C to form a crusty layer which insulates said core from heat energy and minimizes the evolution of combustible gases and smoke.

3. The cable of claim 2, wherein a base material for the thermoplastic insulative layer is selected from the group consisting of poly (vinyl chloride), polyolefins, polyamides, polyurethanes, polyesters, elastomers and copolymers thereof.

4. The cable of claim 3, wherein said polyolefins are selected from the group consisting of polyethylene and polypropylene.

5. The cable of claim 3, wherein said copolymers include comonomers selected from the group consisting of ethylene, propylene, butylene, pentene, hexene, C₁ to C₆ alkyl acrylates or alkyl methacrylates, acrylic acid, methacrylic acid and vinyl acetate.

6. A fire retardant communications cable, said cable comprising:
a core which comprises at least one transmission media;
a thermoplastic insulative layer surrounding at least one transmission media; and
a barrier layer which is contiguous with the thermoplastic insulative layer, wherein the barrier layer comprises a mixture of a first inorganic oxide constituent which is characterized by melting when exposed to temperatures of at least about 350°C and a second inorganic oxide constituent which begins to crystallize at about 650°C.

7. The cable of claim 6, wherein the barrier layer is effective when said cable is exposed to temperatures in the range of about 350°C to 1000°C to form a crusty layer which insulates said core from heat energy and minimizes the evolution of combustible gases and smoke.

8. The cable of claim 7, wherein a base material for the barrier layer is selected from the group consisting of poly (vinyl chloride), polyolefins, polyamides, polyurethanes, polyesters, elastomers and copolymers thereof.

9. The cable of claim 8, wherein said polyolefins are selected from the group consisting of polyethylene and polypropylene.

10. The cable of claim 8, wherein said copolymers include comonomers selected from the group consisting of ethylene, propylene, butylene, pentene, hexene, C₁ to C₆ alkyl acrylates or alkyl methacrylates, acrylic acid, methacrylic acid and vinyl acetate.

## Patentansprüche

1. Brandgeschütztes Nachrichtenkabel mit:
einer Seele, die mindestens ein Übertragungsmedium enthält; und
einer mindestens ein Übertragungsmedium umgebenden flammwidrigen thermoplastischen Isolierschicht, die eine Mischung aus einem ersten anorganischen Oxid, das dadurch gekennzeichnet ist, daß es bei Temperaturen von mindestens etwa 350°C schmilzt, und einem zweiten anorganischen Oxid, das bei etwa 650°C zu kristallisieren beginnt, enthält.

2. Kabel nach Anspruch 1, bei dem die flammwidrige thermoplastische Isolierschicht bei Temperaturen im Bereich von etwa 350°C bis 1000°C eine krustige Schicht, die die Seele von der Wärmeenergie isoliert und die Entwicklung von brennbaren Gasen und Rauch minimiert, bildet.

3. Kabel nach Anspruch 2, bei dem das Grundmaterial für die thermoplastische Isolierschicht aus der Gruppe bestehend aus Polyvinylchlorid, Polyolefinen, Polyamiden, Polyurethanen, Polyestern, Elastomeren und deren Copolymeren stammt.

4. Kabel nach Anspruch 3, bei dem die Polyolefine aus der Gruppe bestehend aus Polyethylen und Polypropylen stammen.

5. Kabel nach Anspruch 3, bei dem die Copolymere Comonomere aus der Gruppe bestehend aus Ethylen, Propylen, Butylen, Penten, Hexen, C₁-C₆-Alkylacrylaten oder -Alkylmethacrylaten, Acrylsäure, Methacrylsäure und Vinylacetat enthalten.

6. Brandgeschütztes Nachrichtenkabel mit:
einer Seele, die mindestens ein Übertragungsmedium enthält;
einer mindestens ein Übertragungsmedium umgebenden flammwidrigen thermoplastischen Isolierschicht und
einer an den Außenmantel angrenzenden Barriereschicht, die eine Mischung aus einem ersten anorganischen Oxid, das dadurch gekennzeichnet ist, daß es bei Temperaturen von mindestens etwa 350°C schmilzt, und einem zweiten anorganischen Oxid, das bei etwa 650°C zu kristallisieren beginnt, enthält.

7. Kabel nach Anspruch 6, bei dem die flammwidrige thermoplastische Isolierschicht bei Temperaturen im Bereich von etwa 350°C bis 1000°C eine krustige Schicht, die die Seele von der Wärmeenergie isoliert und die Entwicklung von brennbaren Gasen und Rauch minimiert, bildet.

8. Kabel nach Anspruch 7, bei dem das Grundmaterial für die thermoplastische Isolierschicht aus der Gruppe bestehend aus Polyvinylchlorid, Polyolefinen, Polyamiden, Polyurethanen, Polyestern, Elastomeren und deren Copolymeren stammt.

9. Kabel nach Anspruch 8, bei dem die Polyolefine aus der Gruppe bestehend aus Polyethylen und Polypropylen stammen.

10. Kabel nach Anspruch 8, bei dem die Copolymere Comonomere aus der Gruppe bestehend aus Ethylen, Propylen, Butylen, Penten, Hexen, C₁-C₆-Alkylacrylaten oder -Alkylmethacrylaten, Acrylsäure, Methacrylsäure und Vinylacetat enthalten.

## Revendications

1. Câble de communications ignifuge, ledit câble comprenant:
une âme qui comprend au moins un milieu de transmission; et
une couche isolante thermoplastique ignifuge entourant au moins un milieu de transmission, dans lequel la couche thermoplastique ignifuge comprend un mélange d'un premier constituant de type oxyde minéral qui est caractérisé en ce qu'il fond lorsqu'il est exposé à des températures d'au moins environ 350°C et un deuxième constituant de type oxyde minéral qui commence à cristalliser à environ 650°C.

2. Câble selon la revendication 1, dans lequel ladite couche isolante thermoplastique ignifuge est efficace lorsque ledit câble est exposé à des températures dans la gamme d'environ 350°C à 1 000°C pour former une couche croûteuse qui isole ladite âme de l'énergie calorifique et minimise le dégagement de gaz combustibles et de fumée.

3. Câble selon la revendication 2, dans lequel un matériau de base pour la couche isolante thermoplastique est choisi dans le groupe constitué par le poly(chlorure de vinyle), les polyoléfines, les polyamides, les polyuréthanes, les polyesters, les élastomères et leurs copolymères.

4. Câble selon la revendication 3, dans lequel lesdites polyoléfines sont choisies dans le groupe constitué par le polyéthylène et le polypropylène.

5. Câble selon la revendication 3, dans lequel lesdits copolymères comprennent les comonomères choisis dans le groupe constitué par l'éthylène, le propylène, le butylène, le pentène, l'hexène, les acrylates d'alkyle en C₁ à C₆ ou méthacrylates d'alkyle, l'acide acrylique, l'acide méthacrylique et l'acétate de vinyle.

6. Câble de communications ignifuge, ledit câble comprenant:
une âme qui comprend au moins un milieu de transmission;
une couche isolante thermoplastique entourant au moins un milieu de transmission; et
une couche d'arrêt contiguë à la couche isolante thermoplastique, dans laquelle la couche d'arrêt comprend un mélange d'un premier constituant de type oxyde minéral qui est caractérisé en ce qu'il fond lorsqu'il est exposé à des températures d'au moins environ 350°C et un deuxième constituant de type oxyde minéral qui commence à cristalliser à environ 650°C.

7. Câble selon la revendication 6, dans lequel la couche d'arrêt est efficace lorsque ledit câble est exposé à des températures dans la gamme d'environ 350°C à 1 000°C pour former une couche croûteuse qui isole ladite âme de l'énergie calorifique et minimise le dégagement de gaz combustibles et de fumée.

8. Câble selon la revendication 7, dans lequel un matériau de base pour la couche d'arrêt est choisi dans le groupe constitué par le poly(chlorure de vinyle), les polyoléfines, les polyamides, les polyuréthanes, les polyesters, les élastomères et leurs copolymères.

9. Câble selon la revendication 8, dans lequel lesdites polyoléfines sont choisies dans le groupe constitué par le polyéthylène et le polypropylène.

10. Câble selon la revendication 8, dans lequel lesdits copolymères comprennent les comonomères choisis dans le groupe constitué par l'éthylène, le propylène, le butylène, le pentène, l'hexène, les acrylates d'alkyle en C₁ à C₆ ou les méthacrylates d'alkyle, l'acide acrylique, l'acide méthacrylique et l'acétate de vinyle.
